(19) Europäisches Patentamt
European Patent Office
Office européen des brevets

(11) EP 3 014 994 B1

# (12) EUROPEAN PATENT SPECIFICATION

(45) Date of publication and mention of the grant of the patent:
**20.11.2019 Bulletin 2019/47**

(21) Application number: **14817376.8**

(22) Date of filing: **23.06.2014**

(51) Int Cl.:
*A01N 25/28* (2006.01) *A01M 1/20* (2006.01)
*A01N 53/06* (2006.01) *A01P 7/00* (2006.01)
*A01N 53/00* (2006.01)

(86) International application number:
**PCT/JP2014/067296**

(87) International publication number:
**WO 2014/208764 (31.12.2014 Gazette 2014/53)**

## (54) MICROCAPSULES FOR THERMAL TRANSPIRATION

MIKROKAPSELN ZUR THERMISCHEN TRANSPIRATION

MICROCAPSULES POUR DIFFUSION THERMIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.06.2013 JP 2013133588**

(43) Date of publication of application:
**04.05.2016 Bulletin 2016/18**

(73) Proprietor: **Sumitomo Chemical Co., Ltd**
**Chuo-ku, Tokyo 104-8260 (JP)**

(72) Inventor: **TAKEMOTO, Yukie**
**Takarazuka-shi**
**Hyogo 665-8555 (JP)**

(74) Representative: **Vossius & Partner**
**Patentanwälte Rechtsanwälte mbB**
**Siebertstrasse 3**
**81675 München (DE)**

(56) References cited:
**EP-A1- 0 322 820** **EP-A1- 0 959 065**
**EP-A1- 1 004 569** **EP-A1- 2 589 290**
**WO-A2-2007/131679** **DE-A1- 19 530 076**
**JP-A- H05 178 703** **JP-A- H05 201 814**
**JP-A- H11 511 151** **JP-A- 2000 239 232**
**JP-A- 2004 502 519** **JP-A- 2007 230 997**
**JP-A- 2013 049 685** **US-A1- 2013 115 261**

- **HERBERT B. SCHER ET AL.: 'Microencapsulation of pesticides by interfacial polymerization utilizing isocyanate or aminoplast chemistry' PESTIC. SCI. vol. 54, no. 4, 01 December 1998, pages 394 - 400, XP055302362 DOI: 10.1002/(SICI)1096-9063(199812)54:4<394::AID-PS829>3**
- **THE PESTICIDE MANUAL, FOURTEENTH EDITION 2006, pages 715, 996-997 - 1050-1051, XP008182663**

Remarks:
The file contains technical information submitted after the application was filed and not included in this specification

EP 3 014 994 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

[TECHNICAL FIELD]

The present invention is related to microcapsule suitable for heat evaporation that encapsulates low vapor pressure insecticidal compound, and, a method of controlling harmful arthropods by using the microcapsule.

[BACKGROUND ART]

Conventionally, although methods of heat evaporation of an insecticidal compound to control pests such as mosquitoes and flies have been carried out, in case that the vapor pressure of the insecticidal compound (see Patent Document 1) as an active ingredient is low, the insecticidal effect is not long-lasting and it is necessary to use an evaporation material of a specialized structure (see Patent Document 2). Development of a pest control agent that can be used in conventional heat evaporation equipment and evaporation material is desirable.

[PRIOR ART]

[PATENT DOCUMENTS]

[Patent Document 1] JP-A-2000-63329 [Patent Document 2] JP-A-2003-201205 [Patent Document 3] JP-A-H07-165505 [Patent Document 4] EP 2 589 290 [Patent Document 5] EP 0 959 065 [Patent Document 6] EP 1 004 569 [Patent Document 7] DE 195 30 076

Patent Document 4 relates to a particular use of formulations comprising microcapsules with polyurea walls obtainable by interfacial polymerization of diphenylmethylen-4,4'-diisocyanate (MDI), wherein the microcapsules comprise an active principle selected from the pyrethroid and/or neonicotinoid classes, synergizing agents selected from piperonylbutoxide (PBO) and 4-[1-(2-butin-1-yloxy)ethyl]-1,2-dimethoxy benzene (Verbutin), the concentration of the active principle in the microcapsule as % by weight on the total of the microcapsule ranges from 1% to 60%, the average diameter of the microcapsule ranges from 2 to 50 μm.

Patent Document 5 relates to 4-methyl-2,3,5,6-tetrafluorobenzyl (1R)-trans-3-(2,2-dichlorovinyl)-2,2-dimethylcyclopropanecarboxylate and to a composition for controlling arthropods, which comprises this compound as an active ingredient and an inert carrier.

Patent Document 6 relates to 4-methoxymethyl-2,3,5,6-tetrafluorobenzyl 3-(2-methyl-1-propenyl)-2,2-dimethylcyclopropanecarboxylate and to its use in controlling a pest.

Patent Document 7 describes a particular insecticidal and acaricidal composition containing microencapsulated transfluthrin.

[DISCLOSURE OF THE INVENTION]

An object of the present invention is to provide microcapsules encapsulating insecticidal compounds described below as an active ingredient, that is suitable for heat evaporation applications, and a method to control harmful arthropods using the microcapsules.

Intensive studies by the present inventor have led to the present invention wherein microcapsule encapsulating pyrethroid compound represented by the following general formulas, characterized by a volume median diameter of 2 to 100μm, a film thickness of 0.02 to 0.3μm, and substantially free of a hydrophobic organic solvent, i.e. the amount of hydrophobic organic solvent relative to the total amount of microcapsule is 5% by weight or less, are found to be suitable for heat evaporation applications.

The present disclosure is as follows.

Item 1: A microcapsule encapsulating one or more compounds selected from a pyrethroid compound shown in general formula (1) or (2)

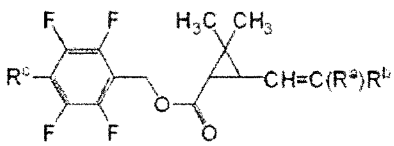
(1)

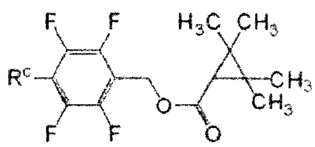
(2)

[wherein, $R^a$ represents a hydrogen atom, a fluorine atom, a chlorine atom or a methyl group;
$R^b$ represents a fluorine atom, a chlorine atom, a methyl group or a trifluoromethyl group;
$R^c$ represents a hydrogen atom, a methyl group, a propargyl group or a methoxymethyl group],
and characterized by a volume median diameter of the microcapsule of 2 to 100μm, a thickness of the microcapsule of 0.02 to 0.3μm, and the microcapsule is substantially free of a hydrophobic organic solvent, i.e. the amount of hydrophobic organic solvent relative to the total amount of microcapsule is 5% by weight or less.

Item 2: The microcapsule according to item 1, wherein the pyrethroid compound represented by the general formula (1) or (2) is a compound selected from the group consisting of 4-methoxymethyl-2,3,5,6-tetrafluorobenzyl-2,2-dimethyl-3-(1-propenyl)cyclopropanecarboxylate, 4-methyl-2,3,5,6-tetrafluorobenzyl-2,2-dimethyl-3-(1-propenyl)cyclopropanecarboxylate, 4-methoxymethyl-2,3,5,6-tetrafluorobenzyl-2,2-dimethyl-3-(2-methyl-1-propenyl)cyclopropane-carboxylate, 4-methoxymethyl-2,3,5,6-tetrafluorobenzyl-2,2-dimethyl-3-(3,3,3-trifluoro-1-propenyl)cyclopropane-carboxylate, 2,3,5,6-tetrafluorobenzyl-2,2-dimethyl-3-(2,2-dichloro-vinyl)cyclopropanecarboxylate, and 4-methyl-2,3,5,6-tetrafluorobenzyl-2,2-dimethyl-3-(2-chloro-3,3,3-trifluoro-1-propenyl)cyclopropane carboxylate.
Item 3: The microcapsule according to the items 1 or 2, wherein the film material of the microcapsule is any of a polyurethane resin, a polyurea resin and a polyurethane polyurea resin.
Item 4: A method of controlling harmful arthropods comprising the step of heating the microcapsule according to any of the items 1 to 3, to 70 to 250 °C.
Item 5: The controlling method according to the item 4, characterized by being the microcapsule supported on a carrier.
Item 6: A heat evaporation harmful arthropod control agent, wherein the microcapsule according to any of the items 1 to 3 is supported on a carrier (hereinafter referred to as the heat evaporation pest control agent).

[MODE FOR CARRYING OUT THE INVENTION]

In the present invention, pyrethroid compound represented by the general formula (1) or (2) contained in the microcapsules, are in particular, 4-methoxymethyl-2,3,5,6-tetrafluorobenzyl-2,2-dimethyl-3-(1-propenyl)cyclopropanecarboxylate (hereinafter referred to as Compound 1), 4-methyl-2, 3, 5, 6-tetrafluorobenzyl-2,2-dimethyl-3-(1-propenyl)cyclopropanecarboxylate (hereinafter referred tc as Compound 2), 4-methoxymethyl-2,3,5, 6-tetrafluorobenzyl-2,2-dimethyl-3-(2-methyl-1-propenyl)cyclopropanecarboxylate (hereinafter referred to as Compound 3), 4-methoxymethyl-2,3,5,6-tetrafluorobenzyl-2,2-dimethyl-3-(3,3,3-trifluoro-1-propenyl)cyclopropane-carboxylate (hereinafter referred to as Compound 4), 2,3, 5, 6-tetrafluorobenzyl-2,2-dimethyl-3-(2,2-dichlorovinyl)cyclopropanecarboxylate (hereinafter referred to as Compound 5), and 4-methyl-2,3, 5, 6-tetrafluorobenzyl-2,2-dimethyl-3-(2-chloro-3,3,3-trifluoro-1-propenyl)cyclo-propanecarboxylate (hereinafter referred to as Compound 6)
The Pyrethroid compound is compound described in JP-A-H11-222463, JP-A-2000-63329, JP-A-2001-11022, and JP-A-2004-002363, and it can be prepared by the method described therein.
In the present invention, though isomers derived from the two asymmetric carbon atoms on the cyclopropane ring and a double bond in the said pyrethroid compound may exist, it is possible to use those containing the active isomers in any ratio.
In the present invention, the pyrethroid compound selected from one or more compounds represented by general formula (1) or (2) (hereinafter referred to as the pyrethroid compound) is contained in the microcapsule of the present invention. The pyrethroid compound to be employed is preferably Compound 1, Compound 2, Compound 3 or Compound 4, more preferably Compound 1, Compound 2 or Compound 4.
In the present invention, the microcapsule (hereinafter referred to as the microcapsule) can be produced by known microencapsulation methods. Examples of the known microencapsulation methods include an interfacial polymerization method, an in-situ polymerization method, a liquid drying method, an orifice method, a coacervation method, a spray drying method, an air suspension coating method, and a high-speed airflow impact method. The microcapsule may be produced by any production method, preferably by an interfacial polymerization method or an in-situ polymerization method, more preferably by an interfacial polymerization method.
As for film materials of the microcapsule, materials that can be formed by the above production methods can be used, and exemplified by, for example, resins such as polyurethane resins, polyurea resins, polyurethane polyurea resins, nylon resins, melamine resins, and polyester resins. In the present invention, polyurethane resins, polyurea resins, polyurethane polyurea resins, nylon resins and melamine resins are preferred, polyurethane resins, polyurea resins and polyurethane polyurea resins are more preferred. Further, in the present invention, it is particularly preferred that the polyurethane resins, polyurea resins or polyurethane polyurea resins produced by an interfacial polymerization method are used as the film material.

The microcapsule have a volume median diameter of 2 to 100μm, preferably a volume median diameter of 4 to 50μm. The volume median diameter of the microcapsule is measured using a laser diffraction particle size distribution measuring apparatus.

The volume median diameter, a typical characteristic value representing the particle size distribution of a particle aggregate, is determined in the following manner.

First, to determine the particle size of the individual particles in the particle aggregate, the total volume of the particle aggregate is set to 100%. X% cumulative volume particle diameter of a particle aggregate is defined as the particle size at which the cumulative volume is X% of the total sample volume, which is computed by cumulating the volume of the particles of a smaller size. The volume median diameter is the particle size that represents 50% of the volume of the total particle aggregate. The volume median diameter is sometimes referred to as a Median diameter.

Examples of commercially available laser diffraction particle size distribution measuring apparatus include Mastersizer 2000 (manufactured by Malvern Ltd.), SALD-2200 (manufactured by Shimadzu Corporation), and Microtrac MT3000 (manufactured by Nikkiso).

In the present invention, the thickness of the microcapsule is determined by calculating the volume median diameter of the microcapsule, and the ratio of the volume of the film material and the core material in the microcapsule. A specific calculation method using the calculation formula is presented below, wherein Wc is the weight of the core material in the microcapsule, Ww is the weight of the film material, pw is the density of the film material, ρc is the density of the core material, and d is the volume median diameter of the core material.

$$\text{Film thickness} = (Ww/Wc) \times (\rho c/\rho w) \times (d/6)$$

The thickness of the microcapsule is obtained by a calculation using this formula.

In the present invention, the weight of the core material of the microcapsule can be calculated as the total weight of the pyrethroid compound and other components added as required. The weight of the film material of the microcapsule can be calculated as the total amount of raw material added as the film material.

The thickness of the microcapsule is 0.02 to 0.3μm, preferably 0.02 to 0.1μm, more preferably 0.02 to 0.08μm.

A method for producing of the microcapsule is described below by considering a method for producing the microcapsule by interfacial polymerization, as an example.

Firstly, the pyrethroid compound is mixed with additional auxiliary components as necessary, and mixed further by the addition of a hydrophobic raw material of the resin forming the film at the operating temperature, to prepare a homogeneous oil phase. As the microcapsule is substantially free of a hydrophobic organic solvent, a hydrophobic organic solvent is not used in the production of the oil phase. When the resin forming the film is a polyurethane resins and/or a polyurea resins, a polyvalent isocyanate is usually used as the hydrophobic raw material of the resin.

Secondly, the resulting oil phase is added and mixed with the water phase containing a dispersing agent, and after it was dispersed (dispersion step), a hydrophilic raw material of the resin forming the film is added to the resulting dispersion. The film-forming reaction takes place at the interface (film formation step), and an aqueous dispersion of the microcapsules is obtained through dispersion.

The dispersing agent used in this case is preferably a polyvinyl alcohol. When the resin forming the film is a polyurethane resin, a polyhydric alcohol is used as the hydrophilic raw material for the resin. When the resin forming the film is a polyurea resin, a polyvalent amine is used as the hydrophilic raw material for the resin. In the film formation step, the temperature for forming the film is in the range of 40 to 85 °C, and the duration is usually 1 to 90 hours. If the temperature in the dispersion step is sufficiently lower than the temperature in the film formation step, a hydrophilic raw material of the resin forming the film may be added during the dispersion step.

It is also possible to isolate the microcapsule by a method such as filtering the aqueous dispersion of the microcapsule. It is possible to produce the heat evaporation pest control agent by the methods described below using the isolated microcapsule or an aqueous dispersion of the microcapsule.

Examples of the polyvalent isocyanate which is a raw material of the resin forming the film of the microcapsules include for example, an aliphatic polyvalent isocyanate such as hexamethylene diisocyanate, an adduct of hexamethylene diisocyanate and trimethylol propane, a biuret condensate of 3 molecules of hexamethylene diisocyanate, an isocyanurate condensate of hexamethylene diisocyanate, an isocyanurate condensate of isophorone diisocyanate, 4,4'-methylenebis-(cyclohexyl isocyanate), and trimethylhexamethylene diisocyanate; and an aromatic polyvalent isocyanate such as an adduct of tolylene diisocyanate and trimethylolpropane, and an isocyanurate condensate of tolylene diisocyanate.
Examples of the polyhydric alcohol include ethylene glycol, propylene glycol, and 1,4-butanediol, and examples of the polyvalent amine include ethylene diamine, hexamethylene diamine, diethylene triamine, and triethylene tetramine.

The microcapsule has a volume median diameter of 2 to 100μm and a film thickness of 0.02 to 0.3μm, and the microcapsule with a volume median diameter is 2 to 100μm can be produced by adjusting the (1) the type and

concentration of the dispersant dissolved in the aqueous phase, (2) the ratio of the aqueous phase and the oil phase, and/or (3) the type of dispersion and the stirring intensity, when dispersing the oil phase in the aqueous phase.

Specifically, for example, to determine the type and concentration of the dispersing agent which is dissolved in the aqueous phase, and the aqueous phase is mixed with the oil phase to disperse the oil phase in the aqueous phase in a volume ratio of the oil phase to the aqueous phase of 0.3 to 2, at the appropriate operating conditions of the dispersing equipment. The volume median diameter of the resulting oil droplets in the dispersion is measured using a laser diffraction particle size distribution measuring apparatus. If the volume median diameter of the oil droplets obtained in the dispersion is below the range, it is possible to increase the volume median diameter by decreasing the dispersant concentration, reducing the stirring intensity when dispersing the oil phase in the aqueous phase, reducing the volume ratio of the aqueous phase relative to the oil phase, and/or changing the dispersant. If the volume median diameter of the oil droplets obtained in the dispersion exceeds the range, it is possible to reduce the volume median diameter by increasing the dispersant concentration, increasing the stirring intensity when dispersing the oil phase in the aqueous phase, increasing the ratio of the aqueous phase relative to the oil phase, and / or changing the dispersant.

Examples of the dispersing equipment that can be used in the dispersion step include propeller stirrer, high-speed rotation stirrer, homogenizer, and Homomic line flow (manufactured by Tokushu Kika Kogyo Ltd.).

Also, the microcapsule with a film thickness of 0.02 to 0.3μm can be produced by appropriately adjusting the weight of the film material relative to the weight of the core material and by appropriately adjusting the volume median diameter of the microcapsule.

Though the microcapsule is substantially free of a hydrophobic organic solvent, examples of the hydrophobic organic solvent in the present invention include aromatic hydrocarbons such as toluene, xylene, alkylbenzene, alkylnaphthalene, and phenylxylylethane, and aliphatic hydrocarbons such as hexane, octane, and decane.

In the present invention, the microcapsule is substantially free of a hydrophobic organic solvent which means that the physical properties of the pyrethroid compound such as the viscosity, or specific gravity, and the physical properties of the mixtures containing a small amount of hydrophobic organic solvent and the pyrethroid compound are the same, for example, the amount of hydrophobic organic solvent relative to the total amount of microcapsule is 5% by weight or less. It is preferred that the microcapsule encapsulates only the pyrethroid compound.

The core material of the microcapsule may contain auxiliary component such as antioxidants, synergists, stabilizers, and fragrances, as necessary. The auxiliary component is selected from substances that uniformly dissolve in the pyrethroid compound. The auxiliary component is contained preferably not more than 5% by weight of the total amount of the microcapsule.

The pyrethroid compound contained in the microcapsules can control harmful arthropods by evaporation. When the microcapsule is used for controlling the harmful arthropods, it is possible to control the harmful arthropods by evaporating the pyrethroid compound through the microcapsule film by heating.

In the microcapsules, the pyrethroid compound is gradually released through the film by evaporation without the destruction of the film of the microcapsules under heating conditions, and the pest control effect of the pyrethroid compound on the harmful arthropods can last for long periods.

When using the microcapsule for the pest controlling method of the present invention, the heating temperature is usually 50 to 300 °C, preferably 70 to 250 °C, more preferably 100 to 220 °C. Also, it can be heated at 140 to 180 °C in commonly used heating devices for control agents of harmful arthropods by heat evaporation. Examples of a heat source for heating include a heat source using electricity such as an incandescent lamp or an electric heater; a heat source using fire such as a lantern or incense; a heat source using a chemical reaction such as iron powder warmer. Using these heat sources, an appropriate device for heating the microcapsule at a temperature of interest can be produced.

The heating device, for example includes the devices described in JP 2008-253175, and JP 2011-14299.

When heating the microcapsules, it is possible to heat the microcapsules directly, but in view of the ease of usage, safety, or the like, it is preferred that the microcapsule used is held on a carrier. Examples of a carrier that can be used with the heat evaporation pest control agent include a fibrous carrier, and a porous carrier. Specific examples of the fibrous carrier include natural fibers such as pulp, cellulose, and cotton, synthetic fibers such as polyester, acrylic, and the like, inorganic fibers such as glass fiber, and asbestos, and examples of the porous carrier include porous inorganic materials such as diatomaceous earth, porous magnetic material such as clay, porous resin such as urethane foam, and polypropylene foam, thermoplastic resin, and gel-like substance.

The shape of the carrier is not necessarily specific, though it is usually based on the shape of the heating portion of the heating device, and usually the molded carrier is like plate. Its size may vary by the heating device, but includes, for example, about 2cm (length) × about 3cm (width) × about 3mm (thickness).

The heat evaporation pest control agent wherein the microcapsules are held to the carrier is produced using an aqueous dispersion in which the microcapsule is dispersed as in the aforementioned production method.

The content of the microcapsule in the heat evaporation pest control agent is determined by the material of the carrier to be used, targeted duration for controlling effect on arthropods, and the pyrethroid compound to be used, but

it is usually about 0.001 to 1g per 1$cm^3$ of the carrier.

The heat evaporation pest control agent, in addition to the microcapsule, as necessary, may contain dyes, antioxidants, synergists, stabilizers, and fragrances.

Examples of the dye include anthraquinone blue dye such as 1,4-dibutylaminoanthraquinone, 1,4-diisopropylaminoanthraquinone,
1,4-bis(2,6-diethyl-4-methylphenylamino)anthraquinone, 1-methylamino-4-*ortho*-tolylaminoanthraquinone, 1-methylamino-4-*meta*-tolylaminoanthraquinone, and 1-methylamino-4-para-tolylaminoanthraquinone.
These dyes may be used alone or as a mixture of two or more thereof, or also as a mixture with other different color dyes.

Examples of the antioxidant include phenolic antioxidants such as dibutylhydroxytoluene, butylhydroxyanisole, 2,2-methylenebis(4-methyl-6-tert-butylphenol), 2,6-di-*tert*-butyl-4-methylphenol,
2-[1-(2-hydroxy-3,5-di-*tert*-pentylphenyl)ethyl]-4,6-di-*tert*-pentylphenylacrylate, and
3,9-bis[2-3-(3-*tert*-butyl-4-hydroxy-5-methylphenyl)propionyl-oxy-1,1-dimethyl]-2,4,8,10-tetraoxaspiro[5.5]undecane.

Examples of the synergist include bis(2,3,3,3-tetrachloropropyl)ether (S-421), N-(2-ethylhexyl)bicyclo[2.2.1]hept-5-ene-2,3-dicarboximide (MGK264), and
α-[2-(2-butoxyethoxy)ethoxy]-4,5-methylenedioxy-2-propyl-toluene (PBO).

Examples of the stabilizer include ultraviolet absorbers such as benzotriazole ultraviolet absorbers, and benzophenone ultraviolet absorbers.

By heating the microcapsule and evaporating the pyrethroid compound, examples of the harmful arthropods can be controlled include the following insects and mites. Lepidoptera pests: Clothes moth (*Tinea pellionella*), and webbing clothes moth (*Tinea bissellinella*);
Diptera pests: Culex species such as *Culex pipiens, Culex tritaeniorhynchus, and Culex quinquefasciatus,* Aedes species such as *Aedes aegypti, and Aedes albopictus,*
Anopheles species such as *Anopheles sinensis, and African malaria* mosquito (*Anopheles gambiae*), midges, houseflies such as False stable fly (*Muscina stabulans*), domestic houseflies (*Musca domestica*), and small houseflies (*Fannia canicularis*), blowflies (*Calliphorini*), flesh flies (*Sarcophagidae*), anthomyiid flies such as seed flies (*Delia platura*), and onion flies (*Delia antiqua*),
fruit flies, Drosophila genus, butterflies (*Psychodidae*), flea flies (*Phoridae*), horse flies (*Tabanidae*), black flies (*Simuliidae*), biting houseflies (*Stomoxys calcitrans*), and biting midges (*Ceratopogonidae*);
Dictyoptera pest: German cockroach (*Blattella germanica*), black cockroach (*Periplaneta fuliginosa*), American cockroach (*Periplaneta americana*), Australian cockroach (*Periplaneta australasiae*), Brown cockroach (*Periplaneta brunnea Burmeister*), and oriental cockroach (*Blatta orientalis*) ;
Hymenoptera insect pests: Ants, bees (wasps such as polistine paper wasp (*Polistes chinensis*), *Polistes riparius*, *Polistes jokahamae*, Yellow paper wasp (*Polistes rothneyi*), *Polistes nipponensis Perez*, Japanese paper wasp (*Polistes snelleni*), and *Polistes japonicus*, vespids such as Japanese
giant hornet (*Vespa mandarinia japonica*), Japanese yellow hornet (*Vespa simillima*), yellow-vented hornet (*Vespa analis*), European hornet (*Vespa crabro*), black-tailed hornet (*Vespa ducalis*), black wasp (*Vespula flaviceps*), fern black hornets (*Vespula shidai Ishikawa*), Median wasp (*Dolichovespula media*), and the like, Bethylidae, carpenter bee (*Xylocopa*), red-banded sand wasps (*Ammophila sabulosa*), and mud dauber (*Vespidae eumeninae*).

[Example]

Then, the present invention is specifically disclosed by Production Examples and Test Examples of the microcapsules. It should be noted that "part (s) " represents the part (s) by weight of the amount of material in the following Production Examples and the like.

Production Example 1

0.89g of Desmodur L-75 (manufactured by Sumika Bayer Urethane Co., Ltd.; an aromatic polyisocyanate based on an adduct of trimethylolpropane and tolylenediisocyanate, and having an average molecular weight of 656; hereinafter referred to as Isocyanate A) and 20.75g of 4-methoxymethyl-2,3,5,6-tetrafluoro-benzyl 2,2-dimethyl-3-(1-propenyl)cyclopropanecarboxylate (with purity of 96.4%; hereinafter referred to as Compound 1A) were uniformly mixed, and an equal amount of aqueous solution A [8% of GL-05 (manufactured by Nippon Synthetic Chemical Industry Co., Ltd., polyvinyl alcohol) and 0.8% of a silicon based antifoaming agent (manufactured by Dow Corning Toray Co., Ltd., Antifoam C Emulsion) were contained; hereinafter, referred to as Aqueous Solution A] was added, and this mixture was dispersed using a homogenizer (Polytron (registered trademark) PT-MR3000, manufactured by Kinematica Inc.), to obtain a dispersed aqueous dispersion of fine liquid droplets having a predetermined volume median diameter. 0.09g of ethylene glycol was added to the said aqueous dispersion and then the dispersion was placed in a hot bath at 60 °C and reacted for 24 hours to obtain a microcapsule dispersion in which the microcapsules are dispersed. To the resulting microcapsule

dispersion, 0.20 g of Bio Hope L (manufactured by KI Chemical Industry Co., Ltd.) and 56.44g of deionized water were added, and an aqueous dispersion of the microcapsule containing 20% by weight of Compound 1A in the composition was obtained (hereinafter, referred to as the present invention Composition 1). The volume median diameter of the resulting microcapsules was 6.36μm, and the calculated thickness of the film was 0.036μm. The volume median diameter is a value measured by a laser diffraction particle size distribution measuring apparatus (manufactured by Malvern Co., Mastersizer 2000).

Production Examples 2 to 6

To obtain an aqueous dispersion of microcapsules, the same procedure as in Production Example 1, with the raw materials in the amount ratios presented below in Table 1 were used (hereinafter referred to as Compositions 2 - 6 respectively).

Table 1

| | Production Example 1 | Production Example 2 | Production Example 3 | Production Example 4 | Production Example 5 | Production Example 6 |
|---|---|---|---|---|---|---|
| Compound 1A | 20.75 | 20.75 | 20.75 | 20.75 | 20.75 | 20.75 |
| Isocyanate A | 0.89 | 0.30 | 0.15 | 1.78 | 0.59 | 0.30 |
| Aqueous Solution A | 21.64 | 21.04 | 20.90 | 22.53 | 21.34 | 21.04 |
| Ethylene glycol | 0.09 | 0.03 | 0.01 | 0.17 | 0.04 | 0.03 |
| Bio Hope L | 0.20 | 0.20 | 0.20 | 0.20 | 0.20 | 0.20 |
| Deionized water | 56.44 | 57.68 | 57.99 | 54.57 | 57.06 | 57.68 |
| Total amount (w/w %) | 100 | 100 | 100 | 100 | 100 | 100 |
| Volume median diameter (μm) | 6.36 | 11.80 | 27.57 | 4.91 | 15.26 | 34.19 |
| Film thickness (μm) | 0.037 | 0.023 | 0.026 | 0.058 | 0.055 | 0.066 |

Comparative Production Example 1

Ten (10) parts of Compound 1A, 10 parts of phenylxylylethane and 0.50 parts of isocyanate L75 were mixed uniformly and the mixture was added to 20 parts of an aqueous solution containing 10% of Gum Arabic (manufactured by Sanei Chemicals Co., Ltd.), and then stirred in a homomixer to obtain an aqueous dispersion with a volume median diameter of about 20μm. Then, 2 parts of ethylene glycol was added to obtained aqueous dispersion, and placed in a hot bath at 60 °C and reacted for 24 hours to obtain an aqueous dispersion of microcapsule. To the aqueous dispersion of microcapsule, 0.2 parts of KELZAN S (manufactured by Sansho Company), 1.0 part of Beegum granules and 56.3 parts of deionized water were added, to obtain 100 parts of the aqueous dispersion of microcapsules containing 10% by weight of Compound 1A (hereinafter, referred to as Comparative Composition 1). The volume median diameter of the obtained microcapsules was 20μm, and the calculated film thickness was 0.066μm.

Comparative Production Example 2

Four (4) parts of Compound 1A, 10 parts of butylhydroxyltoluene, 5 parts of diisononyladipate, 5 parts of acetyltributyl citrate, 25 parts of isopropyl myristate and 51 parts of Shellsol TM were mixed to obtain a solution of a composition containing Compound 1A (hereinafter, referred to as Comparative Composition 2).

Further, the Formulation Examples of the heat evaporation pest control agent containing the microcapsule are described below.

Formulation Example 1

A fibrous plate-like carrier of 2.2cm × 3.5cm × 0.31cm made of pulp and cotton linters is impregnated with an aqueous dispersion containing the microcapsule (composition containing 4% by weight of any compound selected from Compounds 1 to 6), and the moisture is subsequently evaporated by air drying, to obtain the heat evaporation pest control agent of the present invention.

Formulation Example 2

A thick Japanese paper of 2.2cm × 3.5cm × 0.31cm, is impregnated with an aqueous dispersion containing the microcapsule (composition containing 4% by weight of any compound selected from Compounds 1 to 6), and the moisture is subsequently evaporated by air drying, to obtain the heat evaporation pest control agent of the present invention.

Formulation Example 3

A porous ceramic plate of 2.2cm × 3.5cm × 0.31cm, is impregnated with an aqueous dispersion containing the microcapsule (composition containing 4% by weight of a compound selected from compounds 1to 6), and the moisture is subsequently evaporated by air drying, to obtain the heat evaporation pest control agent of the present invention.

Formulation Example 4

In an aluminum dish of 2.2cm × 3.5cm × 0.5cm, an aqueous dispersion containing the microcapsule (composition containing 20% by weight of a compound selected from compounds 1 to 6) is poured, and the moisture is subsequently evaporated by air drying, to obtain the heat evaporation pest control agent of the present invention with the microcapsule being retained on the dish.

Formulation Example 5

An aqueous dispersion containing the microcapsule (composition containing 20% by weight of a compound selected from compounds 1 to 6) is filtered off and the microcapsule remaining on the filter paper is collected. The collected and dried microcapsules are sealed in an aluminum laminate bag of 3.8cm × 2.5cm to obtain the heat evaporation pest control agent of the present invention.

Formulation Example 6

An aqueous dispersion containing the microcapsule (composition containing 20% by weight of a compound selected from Compounds 1 to 6) is filtered off and the microcapsule remaining on the filter paper is collected. 50 parts of the collected and dried microcapsules are mixed with 50 parts of sand, and the mixture is enclosed in a cylindrical aluminum capsule with a depth of 1cm, to obtain a heat evaporation pest control agent of the present invention.

Then, when the microcapsules of the present invention are used, as shown in the Test examples, while retaining the active ingredient for a long time during heat evaporation, the pyrethroid compound which is the active ingredient is gradually evaporated.

Test Example 1

In fibrous carriers (3.5cm × 2.2cm × 1.5mm thickness), 0.5g of each of the present invention Compositions 1 to 6 obtained in the above Formulation Examples was diluted five-fold with deionized water and impregnated respectively. The carriers were heated on a flat hot plate controlled to a temperature of about 200 °C. After heating for a predetermined time, the recovered carrier was immersed in acetone to extract the Compound 1A, and the residual amount of the Compound 1A held by the carriers was analyzed.

Also, Compound 1A of the aforementioned Comparative Composition 1 and Comparative Composition 2, was similarly loaded in a fibrous carrier and subjected to a similar test, and the residual amount of Compound 1A was analyzed.

The results are presented in Table 2.

Table 2

| | Heating time | |
|---|---|---|
| | 0 hr | 1 hr |
| the present invention Composition 1 | 20.8 | 16.1 |
| the present invention Composition 2 | 20.8 | 11.3 |
| the present invention Composition 3 | 18.6 | 5.0 |
| the present invention Composition 4 | 20.8 | 18.0 |
| the present invention Composition 5 | 20.3 | 17.6 |
| the present invention Composition 6 | 19.9 | 18.8 |
| Comparative Composition 1 | 9.8 | 0.5 |
| Comparative Composition 2 | 20.0 | 0.0 |
| (※ The numbers in the table represent the residual amount of the Compound 1A (mg).) | | |

Test Example 2

In fibrous carriers (3.5cm × 2.2cm × 1.5mm thickness), 0. 5g of each of the present invention Composition 1 to 6 obtained in the above Formulation Examples was diluted five-fold with deionized water and impregnated respectively. The carriers were heated on a flat hot plate controlled to a temperature of about 160 °C. After heating for a predetermined time, the recovered carriers were immersed in acetone to extract the Compound 1A, and the residual amount of the Compound 1A held by the carrier was analyzed.

The results are presented in Table 3.

Table 3

| | Heating time | | |
|---|---|---|---|
| | 0 hr | 1 hr | 3 hr |
| the present invention Composition 1 | 20.8 | 8.1 | 6.6 |
| the present invention Composition 2 | 20.8 | 4.5 | 1.1 |
| the present invention Composition 3 | 20.5 | 2.4 | 1.5 |
| the present invention Composition 4 | 20.8 | 15.3 | 14.1 |
| the present invention Composition 5 | 19.9 | 14.9 | 13.7 |
| (※ The numbers in the table represent the residual amount of Compound 1A (mg).) | | | |

Test Example 3

In fibrous carriers (3.5cm × 2.2cm × 1.5mm thickness), 0.5g of each of the present invention Composition 1 to 6 obtained in the above Formulation Examples was diluted five-fold with deionized water and impregnated respectively. The carriers were heated on a flat hot plate controlled to a temperature of about 120 °C. After heating for a predetermined time, the recovered carrier was immersed in acetone to extract the Compound 1A, and the residual amount of the Compound 1A held by the carrier was analyzed.

The results are presented in Table 4.

Table 4

| | Heating time | | | |
|---|---|---|---|---|
| | 0 hr | 1 hr | 3 hr | 4 hr |
| the present invention Composition 1 | 20.8 | 19.4 | 12.4 | 11.8 |

(continued)

| | Heating time | | | |
|---|---|---|---|---|
| | 0 hr | 1 hr | 3 hr | 4 hr |
| the present invention Composition 2 | 20.8 | 19.1 | 12.9 | 10.9 |
| the present invention Composition 3 | 20.0 | 19.1 | 14.7 | 10.5 |
| (※ The numbers in the table represent the residual amount of Compound 1A (mg).) | | | | |

Production Example 7

0.18 parts of Desmodur L-75 (manufactured by Sumika Bayer Urethane Co., Ltd.; an aromatic polyisocyanate based on an adduct of trimethylolpropane and tolylenediisocyanate, and having an average molecular weight of 656; hereinafter referred to as Isocyanate A) and 20.75 parts of 4-methoxymethyl-2,3, 5,6-tetrafluorobenzyl-2,2-dimethyl-3-(1-propenyl)cyclopropanecarboxylate (common name methofluthrin; with a purity of 96.4%; hereinafter referred to as Compound 1A) were mixed to obtain a homogeneous mixture. This mixture and an equal amount of the aqueous solution B [8% of ARABICCOL SS (gum arabic from Sanei Chemicals Trading Co.) and 0.8% of silicon-based anti-foaming agent (Anti-foam C emulsion manufactured by Dow Corning Toray Co., Ltd.) were contained; hereinafter referred to as Aqueous solution B] were added to a homogenizer (Polytron (registered trademark) PT-MR3000, manufactured by Kinematica Inc.), and subjected to a dispersion treatment to obtain an aqueous dispersion of fine droplets of a predetermined volume median diameter. 0.02 parts of ethylene glycol was added and then mixed and reacted for 24 hours in a hot bath at 60 °C, to obtain an aqueous dispersion of the microcapsule. To the resulting microcapsule dispersion, 0.20 parts of Bio Hope L (manufactured by KI Chemical Industry Co., Ltd.) and 57.85 parts of deionized water were added, and an aqueous dispersion of the microcapsule containing 20% by weight of Compound 1A in the composition was obtained (hereinafter, referred to as the present invention Composition 7). The volume median diameter of the resulting microcapsule was 26.53μm, and the calculated thickness of the film was 0.031μm. The volume median diameter is a value measured by a laser diffraction particle size distribution measuring apparatus (manufactured by Malvern Co., Mastersizer 2000).

Production Examples 8 to 10

To obtain an aqueous dispersion of microcapsule, the same formulation as in Production Example 7, with raw materials in the amount ratios presented below in Table 5 were used (hereinafter referred to as the present invention Compositions 8 to 10 respectively).

Table 5

| | Production Example 7 | Production Example 8 | Production Example 9 | Production Example 10 |
|---|---|---|---|---|
| Compound 1A | 20.75 | 20.62 | 20.64 | 19.51 |
| Isocyanate A | 0.18 | 0.44 | 0.89 | 2.11 |
| Aqueous solution B | 20.99 | 21.23 | 21.66 | 22.01 |
| Ethylene glycol | 0.02 | 0.04 | 0.10 | 0.20 |
| Bio Hope L | 0.20 | 0.19 | 0.21 | 0.20 |
| Deionized water | 57.85 | 57.47 | 56.51 | 55.97 |
| Total amount (w/w %) | 100 | 100 | 100 | 100 |
| Volume median diameter (μm) | 26.53 | 21.62 | 20.50 | 19.06 |
| Film thickness (μm) | 0.031 | 0.061 | 0.114 | 0.262 |

Test Example 4

In a fibrous carrier (3.5cm × 2.2cm × 1.5mm thickness), 0. 5g of each of the Compositions 7 to 10 of the

invention obtained in the above Formulation Examples was diluted five-fold with deionized water and impregnated respectively. The carrier was heated on a flat hot plate controlled to a temperature of about 160 °C. After heating for a predetermined time, the recovered carrier was immersed in acetone to extract the Compound 1A, and the residual amount of the Compound 1A held by the carrier was analyzed.

The results are presented in Table 6.

Table 6

| | Heating time | | | | |
|---|---|---|---|---|---|
| | 0 hr | 1 hr | 2 hr | 3 hr | 4 hr |
| the present invention Composition 7 | 21.86 | 11.56 | 2.16 | 0.32 | 0.21 |
| the present invention Composition 8 | 21.40 | 11.80 | 4.01 | 1.58 | 1.16 |
| the present invention Composition 9 | 20.82 | 12.01 | 7.59 | 5.95 | 5.16 |
| the present invention Composition 10 | 20.80 | 14.44 | 13.70 | 11.61 | 11.49 |
| (※ The numbers in the table represent the residual amount of Compound 1A (mg).) | | | | | |

[Industrial Applicability]

In the present invention, when a highly volatile pyrethroid compound represented by the general formula (1) or (2) is used as the active ingredient in the heat evaporation harmful arthropod control agent, it can have a long-lasting pest control effect.

With the microcapsule of the present invention comprising a pyrethroid compound as the active ingredient for the control of harmful arthropods, it is possible for the pyrethroid compound to gradually evaporate over a long period of time, without the microcapsule being destroyed under the heating conditions, which is effective in controlling the harmful arthropods.

## Claims

1. A microcapsule encapsulating one or more compounds selected from a pyrethroid compound shown in general formula (1) or (2)

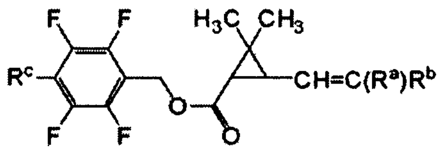
(1)

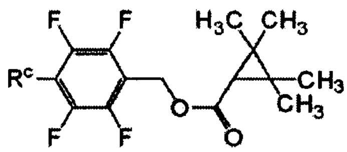
(2)

wherein, $R^a$ represents a hydrogen atom, a fluorine atom, a chlorine atom or a methyl group;
$R^b$ represents a fluorine atom, a chlorine atom, a methyl group or a trifluoromethyl group;
$R^c$ represents a hydrogen atom, a methyl group, a propargyl group or a methoxymethyl group,
and a volume median diameter of the microcapsule is 2 to 100 μm, a film thickness of the microcapsule is 0.02 to 0.3 μm, and the microcapsule is substantially free of a hydrophobic organic solvent,
**characterized in that** the amount of hydrophobic organic solvent relative to the total amount of microcapsule is 5% by weight or less.

2. The microcapsule according to claim 1, wherein the pyrethroid compound represented by the general formula (1) or (2) is a compound selected from the group consisting of 4-methoxymethyl-2,3,5,6-tetrafluorobenzyl 2,2-dimethyl-3-(1-propenyl)cyclopropane-carboxylate,
4-methyl-2,3,5,6-tetrafluorobenzyl 2,2-dimethyl-3-(1-propenyl)cyclopropane-carboxylate,
4-methoxymethyl-2,3,5,6-tetrafluorobenzyl 2,2-dimethyl-3-(2-methyl-1-propenyl)cyclopropanecarboxylate,
4-methoxymethyl-2,3,5,6-tetrafluorobenzyl 2,2-dimethyl-3 -(3,3,3 -trifluoro-1 - propenyl)cyclopropanecarboxylate,

2,3,5,6-tetrafluorobenzyl 2,2-dimethyl-3-(2,2-dichlorovinyl)cyclopropanecarboxylate, and 4-methyl-2,3,5,6-tetrafluorobenzyl 2,2-dimethyl-3-(2-chloro-3,3,3-trifluoro-1-propenyl)cyclopropanecarboxylate.

3. The microcapsule according to claim 1, wherein the film material of the microcapsule is any of a polyurethane resin, a polyurea resin and a polyurethane polyurea resin.

4. A method of controlling harmful arthropods comprising the step of heating the microcapsule according to any of the claims 1 to 3, to 70 to 250 °C.

5. The controlling method according to claim 4, **characterized by** being the microcapsule supported on a carrier.

6. A heat evaporation harmful arthropod control agent, wherein the microcapsule according to any of claims 1 to 3 is supported on a carrier.

## Patentansprüche

1. Eine Mikrokapsel, welche eine oder mehrere Verbindungen ausgewählt aus einer Pyrethroidverbindung, wie in der allgemeinen Formel (1) oder (2) gezeigt, verkapselt

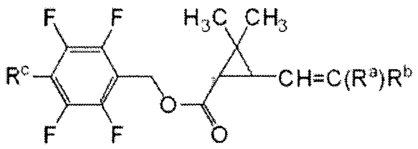

(1)

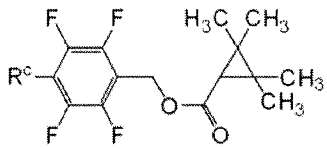

(2)

wobei $R^a$ ein Wasserstoffatom, ein Fluoratom, ein Chloratom oder eine Methylgruppe darstellt;
$R^b$ ein Fluoratom, ein Chloratom, eine Methylgruppe oder eine Trifluormethylgruppe darstellt;
$R^c$ ein Wasserstoffatom, eine Methylgruppe, eine Propargylgruppe oder eine Methoxymethylgruppe darstellt, und ein mittlerer Volumendurchmesser der Mikrokapsel 2 bis 100 μm beträgt, eine Filmdicke der Mikrokapsel 0,02 bis 0,3 μm beträgt und die Mikrokapsel im Wesentlichen frei von einem hydrophoben organischen Lösungsmittel ist,
**dadurch gekennzeichnet, dass** die Menge des hydrophoben organischen Lösungsmittels, bezogen auf die Gesamtmenge der Mikrokapsel, 5 Gew.-% oder weniger beträgt.

2. Die Mikrokapsel gemäß Anspruch 1, wobei die Pyrethroidverbindung, dargestellt durch die allgemeine Formel (1) oder (2) eine Verbindung ist ausgewählt aus der Gruppe bestehend aus 4-Methoxymethyl-2,3,5,6-tetrafluorbenzyl-2,2-dimethyl-3-(1-propenyl)cyclopropancarboxylat, 4-Methyl-2,3,5,6-tetrafluorbenzyl-2,2-dimethyl-3-(1-propenyl)cyclopropancarboxylat, 4-Methoxymethyl-2,3,5,6-tetrafluorbenzyl-2,2-dimethyl-3-(2-methyl-1-propenyl)cyclopropancarboxylat, 4-Methoxymethyl-2,3,5,6-tetrafluorbenzyl-2,2-dimethyl-3-(3,3,3-trifluor-1-propenyl)cyclopropancarboxylat, 2,3,5,6-Tetrafluorbenzyl-2,2-dimethyl-3-(2,2-dichlorvinyl)cyclopropancarboxylat und 4-Methyl-2,3,5,6-tetrafluorbenzyl-2,2-dimethyl-3-(2-chlor-3,3,3-trifluor-1-propenyl)cyclopropancarboxylat.

3. Die Mikrokapsel gemäß Anspruch 1, wobei das Filmmaterial der Mikrokapsel ein beliebiges aus einem Polyurethanharz, einem Polyharnstoffharz und einem Polyurethanpolyharnstoffharz ist.

4. Ein Verfahren zur Bekämpfung von schädlichen Arthropoden, umfassend den Schritt des Erwärmens der Mikrokapsel gemäß einem der Ansprüche 1 bis 3 auf 70 bis 250 °C.

5. Das Verfahren zur Bekämpfung gemäß Anspruch 4, **dadurch gekennzeichnet, dass** die Mikrokapsel auf einem Träger getragen wird.

6. Ein Mittel zur Bekämpfung von schädlichen Arthropoden mittels Wärmeverdampfung, wobei die Mikrokapsel gemäß einem der Ansprüche 1 bis 3 auf einem Träger getragen ist.

## Revendications

1. Microcapsule encapsulant un ou plusieurs composés choisis parmi un composé de pyréthroïde représenté dans la formule générale (1) ou (2)

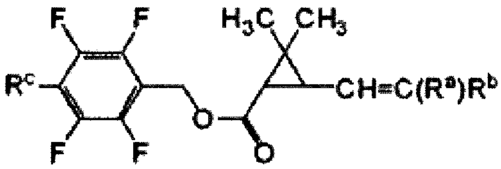

(1)

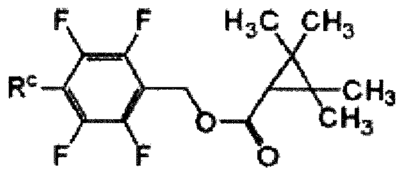

(2)

dans lesquelles, $R^a$ représente un atome d'hydrogène, un atome de fluor, un atome de chlore ou un groupe méthyle ;
$R^b$ représente un atome de fluor, un atome de chlore, un groupe méthyle ou un groupe trifluorométhyle ;
$R^c$ représente un atome d'hydrogène, un groupe méthyle, un groupe propargyle ou un groupe méthoxyméthyle,
et un diamètre médian en volume de la microcapsule est de 2 à 100 $\mu$m, une épaisseur de film de la microcapsule est de 0,02 à 0,3 $\mu$m, et la microcapsule est essentiellement exempte d'un solvant organique hydrophobe, **caractérisée en ce que** la quantité de solvant organique hydrophobe par rapport à la quantité totale de microcapsule est de 5 % en masse ou inférieure.

2. Microcapsule selon la revendication 1, dans laquelle le composé de pyréthroïde représenté par la formule générale (1) ou (2) est un composé choisi dans le groupe consistant en
2,2-diméthyl-3-(1-propényl)cyclopropanecarboxylate de 4-méthoxyméthyl-2,3,5,6-tétra-fluorobenzyle,
2,2-diméthyl-3-(1-propényl)cyclopropanecarboxylate de 4-méthyl-2,3,5,6-tétrafluorobenzyle,
2,2-diméthyl-3-(2-méthyl-1-propényl)cyclopropanecarboxylate de 4-méthoxyméthyl-2,3,5,6-tétrafluorobenzyle,
2,2-diméthyl-3-(3,3,3-trifluoro-1-propényl)cyclopropanecarboxylate de 4-méthoxyméthyl-2,3,5,6-tétrafluorobenzyle,
2,2-diméthyl-3-(2,2-dichlorovinyl)cyclopropanecarboxylate de 2,3,5,6-tétrafluorobenzyle, et
2,2-diméthyl-3-(2-chloro-3,3,3-trifluoro-1-propényl)cyclopropane-carboxylate de 4-méthyl-2,3,5,6-tétrafluorobenzyle.

3. Microcapsule selon la revendication 1, dans laquelle le matériau de film de la microcapsule est l'un quelconque d'une résine de polyuréthane, une résine de polyurée et une résine de polyuréthane polyurée.

4. Procédé de contrôle d'arthropodes nuisibles comprenant l'étape de chauffage de la microcapsule selon l'une quelconque des revendications 1 à 3, à de 70 à 250°C.

5. Procédé de contrôle selon la revendication 4, caractérisé en étant la microcapsule supportée sur un support.

6. Agent de contrôle d'arthropodes nuisibles à évaporation de chaleur, dans lequel la microcapsule selon l'une quelconque des revendications 1 à 3 est supportée sur un support.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000063329 A
- JP 2003201205 A
- JP H07165505 A
- EP 2589290 A
- EP 0959065 A
- EP 1004569 A
- DE 19530076
- JP H11222463 A
- JP 2001011022 A
- JP 2004002363 A
- JP 2008253175 A
- JP 2011014299 A